(19) Europäisches Patentamt
European Patent Office
Office européen des brevets

(11) Publication number: **0 184 408 B1**

(12) **EUROPEAN PATENT SPECIFICATION**

(45) Date of publication of patent specification: **23.03.88**

(51) Int. Cl.⁴: **C 07 C 91/08,** C 07 C 89/00, B 01 D 53/14

(21) Application number: **85308741.9**

(22) Date of filing: **02.12.85**

(54) **Diaminoalcohols, their preparation and their use as acid gas removal agents.**

(30) Priority: **03.12.84 US 677752**
**02.07.85 US 751007**

(43) Date of publication of application:
**11.06.86 Bulletin 86/24**

(45) Publication of the grant of the patent:
**23.03.88 Bulletin 88/12**

(84) Designated Contracting States:
**BE DE FR GB IT NL**

(56) References cited:
**DE-A-3 200 111**
**DE-C- 570 677**
**US-A-3 288 748**
**US-A-4 112 052**
**US-A-4 324 918**

(73) Proprietor: **Exxon Research and Engineering Company**
**P.O.Box 390 180 Park Avenue**
**Florham Park New Jersey 07932 (US)**

(72) Inventor: **Sartori, Guido**
**73 Meadowview**
**Annandale New Jersey 08801 (US)**
Inventor: **Stogryn, Eugene Leo**
**3 Sharp Road**
**Edison New Jersey 08817 (US)**

(74) Representative: **Pitkin, Robert Wilfred et al**
**ESSO Engineering (Europe) Ltd.**
**Patents & Licences Apex Tower**
**High Street New Malden**
**Surrey KT3 4DJ (GB)**

**EP 0 184 408 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to diaminoalcohols.

Accordingly, this invention relates to diaminoalcohols containing a tertiary amino group. and a sterically hindered secondary amino group separated by three carbon atoms, which are useful when combined with a solvent in removing acidic gases, i.e., $CO_2$ and $H_2S$, from normally gaseous mixtures. This invention also relates to a novel two-step process for preparing these diaminoalcohols and di-secondary aminoalcohol homologues.

It is well known in the art to treat gases, such as mixtures containing acidic gases including $CO_2$, $H_2S$, $CS_2$, HCN, COS and oxygen and sulfur derivatives of $C_1$ to $C_4$ hydrocarbons with amine solutions to remove these acidic gases. The amine usually contacts the acidic gases as an aqueous solution containing the amine in an absorber tower with the aqueous amine solution contacting the acidic gases counter currently.

The treatment of acid gas mixtures with amine solutions typically results in the simultaneous removal of substantial amounts of the acid gases. For example, in one such process generally referred to as the "aqueous amine process," relatively concentrated amine solutions are employed. A recent improvement on this process involves the use of sterically hindered amines as described in U.S. Patent No. 4,112,052 to obtain nearly complete removal of acid gases such as $CO_2$ and $H_2S$. This type of process may be used where the partial pressures of the $CO_2$ and related gases are low.

Another process often used for specialized applications where the partial pressure of $CO_2$ is extremely high and/or where many acid gases are present, e.g., $H_2S$, COS, $CH_3SH$ and $CS_2$ involves the use of an amine in combination with a physical absorbent, generally referred to as the "non-aqueous solvent process." An improvement on this process involves the use of sterically hindered amines, including aminoalcohols, and organic solvents as the physical absorbent such as described in U.S. Pat. Nos. 4,112,051 and 4,100,257.

Examples of non-sterically hindered primary and secondary aminoalcohols which have also been effectively employed for absorbing acid gases are monoethanolamine, diethanolamine, dipropanolamine, hydroxy ethoxyethylamine, diisopropanolamine, methyldiethanolamine and diethyl monoethanolamine.

Other patents which describe use of alkanolamines in acid gas scrubbing are U.S. Pat. Nos. 3,954,873; 3,959,170; 4,074,013; 4,096,085 and 4,217,238. U.S. 4,217,238 describes the use of certain sterically hindered aliphatic diaminoalcohols to remove acid gases while U.S. 3,954,873 describes a di-tertiaryamino alcohol having three hydroxy groups as useful for this purpose.

U.S. Pat. No. 3,197,510 describes compounds useful as lube oil additives having the formula:

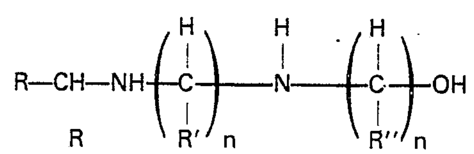

where R and R′ are alkyl groups and the total number of carbon atoms between them is 2—50; n is 2—4; R″ is H or an $C_2$—$C_8$ alkyl group. These compounds are prepared by a reductive alkylation of a ketone and an aminoalkyl alkanolamine. Also disclosed as useful as a lubricating oil additive in U.S. Pat. No. 3,869,145 is a diaminoalcohol with a shorter chain than that of U.S. 3,197,510 where the nitrogen atoms are in the 3 and 6 positions.

U.S. Pat. No. 3,288,748 discloses a stabilizer for polyolefins of the formula:

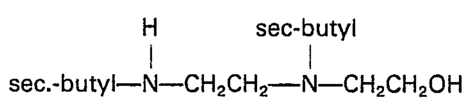

A new diaminoalcohol has now been discovered which contains three methylene groups between a secondary and tertiary amine and is useful for $CO_2$ and $H_2S$ removal in both aqueous amine processes and non-aqueous solvent processes.

More specifically, the present invention relates to a diaminoalcohol composition having the formula:

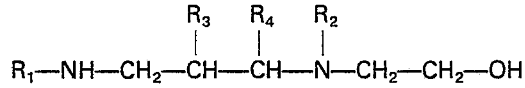

wherein $R_1$ is a secondary alkyl group having from three to five carbon atoms, $R_2$ is an alkyl group having from one to three carbon atoms, $R_3$ and $R_4$ are independently hydrogen or methyl groups; and $R_1$ and $R_2$ are selected so that the total number of carbon atoms in $R_1$ and $R_2$ is no greater than six. Preferably the total number of carbon atoms in the diaminoalcohol is no more than 11.

These compositions especially those where $R_3$ and $R_4$ are hydrogen, may be prepared by a process comprising the steps of:

(a) reacting acrylonitrile with a 2-aminoethanol of the formula:

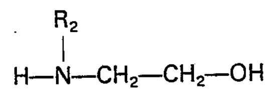

where $R_2$ is an alkyl group having one to three carbon atoms, to form a nitrilo 2-aminoethanol of the formula:

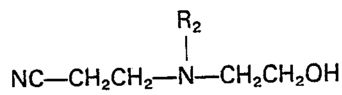

and (b) reacting the nitrilo aminoethanol from step (a) with a ketone containing from three to five carbon atoms under hydrogenation conditions in the presence of hydrogen gas and a hydrogenation catalyst until the appropriate product is obtained.

When combined with a solvent selected from water, a physical absorbent or a mixture thereof, these diaminoalcohols form absorbent solutions which are useful in removing acid gases from a normally gaseous mixture. The process involves contacting the normally gaseous mixture, under conditions whereby the acid gases are absorbed therefrom with the absorbent solution and desorbing at least a portion of the absorbed acid gases from the solution.

The analogous di-secondary aminoalcohols of the prior art exhibit substantially inferior properties under $CO_2$ removal conditions because we believe the amine degrades much faster. In addition, if the total number of carbon atoms in the diaminoalcohol exceeds 11 as in U.S. Pat. 3,288,748, the amine exhibits two phases at typical desorption temperatures and thus is useless for acid gas scrubbing.

The diaminoalcohols herein show comparable $CO_2$ removal properties as those compounds described in U.S. Pat. No. 4,112,051 and 4,112,052, however, the class of compounds herein described is superior to these latter compounds in their stability against degradation under $CO_2$-rich conditions.

In the drawings:

Fig. 1 is a diagrammatic flow sheet illustrating an experimental reaction apparatus for removing carbon dioxide from gas streams.

The diaminoalcohols of this invention have the formula:

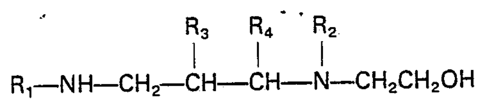

where $R_1$ is a secondary alkyl group having from three to five carbon atoms, preferably an isopropyl group; $R_2$ is an alkyl group having from one to three carbon atoms, preferably a methyl, ethyl or isopropyl group; and $R_3$ and $R_4$ are independently hydrogen or methyl. The $R_2$ group may thus be straight chain or branched alkyl groups. To ensure that the compounds will be useful as acidic gas removing agents, the total number of carbon atoms in the compounds should not exceed 11 and preferably $R_3$ and $R_4$ are hydrogen. The total number of carbon atoms atoms in $R_1$ and $R_2$ must be no greater than six. If the total number of carbon atoms exceeds this maximum, the compounds will not be soluble under acidic gas absorption conditions.

Examples of suitable compounds herein are 3,7-diaza-3,8-dimethyl-1-nonanol, 3,7-diaza-3-ethyl-8-methyl-1-nonanol, 3,7-diaza-3-isopropyl-8-methyl-1-nonanol, 3,7-diaza-3,8-dimethyl-1-decanol, and the like. The most preferred compounds herein are the following:

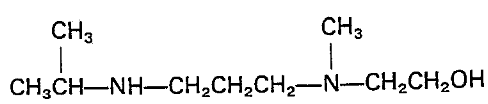

3,7-diaza-3,8-dimethyl-1-nonanol (DDN)

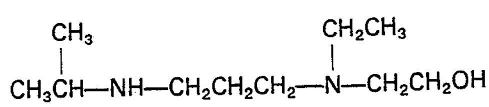

3,7-diaza-3-ethyl-8-methyl-1-nonanol (DEMN)

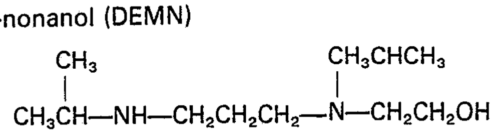

3,7-diaza-3-isopropyl-8-methyl-1-nonanol.

This novel class of compounds can be prepared by at least two different methods. In a three-step method for preparing the compounds, a 2-secondary aminoethanol of the formula:

$$\begin{array}{c} R_2 \\ | \\ HN—CH_2CH_2—OH \end{array}$$

where $R_2$ is an alkyl group having from one to three carbon atoms is first reacted with acrylonitrile to form a nitrilo tertiary aminoethanol of the formula:

$$NCCH_2CH_2—\overset{\displaystyle R_2 \atop |}{N}—CH_2CH_2OH$$

Typically this reaction may be conducted by adding the acrylnitrile slowly (i.e., over a period of hours depending on the quantity of material) to the amino alcohol. Because the reaction is exothermic, the temperature of the reaction mixture will increase as more acrylonitrile is added. There is no need to apply an external source of heat to the reaction mixture. The apparatus employed for this step generally is equipped with a stirring mechanism, a condenser to prevent loss of material, a dropping funnel through which the acrylonitrile is added, and a thermometer to monitor the temperature. The temperature preferably should not be allowed to exceed about 130°C during the addition of the acrylonitrile and may be controlled by applying an external cooling source. More preferably, the temperature should not exceed about 100°C. After the addition is complete the product is generally allowed to cool to room temperature.

In the second step of this three-step method the unpurified nitrilo compound from the first step is reduced to form a primary amine from the nitrilo group. This reduction is generally carried out in an autoclave by means of hydrogenation. This hydrogenation step may be conducted by any means known in the art. In one technique the nitrilo compound is diluted with an inert solvent such as methanol or ethanol and placed in an autoclave together with a base, such as NaOH, and a hydrogenation catalyst which may be, e.g., Pd on carbon or Raney nickel. The catalyst is ordinarily prewashed before use with the solvent being employed. The hydrogenation is then conducted by introducing hydrogen gas into the reaction vessel and increasing the temperature and pressure. Generally the temperature may range from 30°C to 100°C, preferably 30°C to 55°C, and the pressure from 6.89 to 103.42 bar (100 to 1500 psi), preferably 10.34 to 96.5 bar (150 to 1400 psi). The amount of time required for hydrogenation will vary with the temperature, pressure, and catalyst employed, but generally will be at least about 2 hours.

To recover the hydrogenated product from the reaction mixture one separates the solvent from the product by an appropriate means, e.g., distillation. The product may be purified from the pot residue by, e.g., fractionation through a column or by other means of purification.

In the third step of the process herein the hydrogenated product (primary amine) is alkylated so as to form a secondary amino group so that the final product contains both a secondary and a tertiary amine. The alkylation takes place by reacting the primary amine with a ketone containing three to five carbon atoms (which represents the $R_1$ group and is preferably acetone) under hydrogenation conditions. Thus, typically the product of the second step, the ketone and the hydrogenation catalyst are charged into an autoclave and hydrogenation takes place as described above. The catalyst is then separated from the mixture by filtration and the filtrate is distilled to yield the purified product.

An alternative procedure for preparing the diaminoalcohols of this invention is a two-step method wherein the hydrogenation and alkylation steps are combined so as to occur simultaneously. This method is a preferred method over the three-step method by eliminating a lengthy step of preparing the primary amine intermediate. This method not only may be used to prepare the novel class of secondary-tertiary diaminoalcohols of this invention but also the analogous disecondary aminoalcohols, which had previously only been prepared by a three-step method. This two-step method is useful for preparing not only the gas treating agents of this invention but also the commercially useful aminoalcohols described by U.S. Pat. 3,197,510 useful as oil well additives.

In the first step of this alternative procedure acrylonitrile is reacted with a 2-aminoethanol of the formula:

$$H—\overset{\displaystyle R_2 \atop |}{N}—CH_2CH_2OH$$

where $R_2$ is an alkyl group having one to three carbons, to form a nitrilo 2-aminoethanol of the formula:

$$NCCH_2CH_2—\overset{\displaystyle R_2 \atop |}{N}—CH_2CH_2OH$$

This reaction is carried out in the same manner as described above for the first step of the three-step

method, the only difference being that the 2-aminoethanol reagent here may be a primary as well as a secondary amino alcohol.

In the second step of this two-step method the unpurified nitrilo compound from the first step is simultaneously reduced and alkylated to a secondary amine. Thus the nitrilo compound is reacted with a ketone containing from three to five carbon atoms as described above for the three-step method under hydrogenation conditions in the presence of hydrogen gas and a hydrogenation catalyst until the appropriate product is obtained. In this step typically the nitrilo compound is mixed with the appropriate ketone and placed in an autoclave together with a hydrogenation catalyst such as, e.g., Pd on carbon or Raney nickel, and the appropriate ketone. The preferred catalyst for use herein is Raney nickel. The Raney nickel is preferably prewashed with the ketone and the Pd on C may be prewashed with water. The hydrogenation is then conducted by introducing hydrogen gas into the reaction vessel and increasing the temperature and pressure. Generally, the temperature will range from about 30°C to about 130°C, preferably about 30°C to about 70°C, and the pressure from about 100 to about 1500 psi, preferably about 150 to about 1400 psi. The amount of time required for hydrogenation will vary with the temperature and pressure employed, but generally will be at least about 2 hours. The amount of product may be monitored by use of a gas chromatograph. The hydrogenation may also be accomplished in batches wherein the batches are later combined. After the hydrogenation is complete the product may be recovered by any suitable means. Typically, the reaction mixture is filtered through a funnel, such as a pre-coated Buechner funnel, and concentrated by use of a column or a vacuum so as to remove the low-boiling materials. The residue is then distilled so as to obtain the purified product.

The aminoalcohols of this invention may be employed for the absorption of acidic gases. More specifically, acidic gases may be removed from a normally gaseous mixture (i.e., gaseous under ambient conditions) by contacting the mixture under absorption conditions with an absorbent solution containing the diaminoalcohol and desorbing at least a portion of the absorbed acidic gases from the solution. The regenerated solution obtained on desorption may then be recycled by contacting it with a fresh mixture if a continuous process is being conducted.

The absorbent solution will contain a solvent in addition to the aminoalcohol. Preferably, but not exclusively, this solvent is water, a physical absorbent or a mixture of water and physical absorbent. Solvents which are physical absorbents (as opposed to the aminoalcohols, which are chemical absorbents) are described, for example, in U.S. Pat. No. 4,112,051, the entire disclosure of which is incorporated herein by reference. These solvents include, e.g., aliphatic acid amides, N-alkylated pyrrolidones, sulfones, sulfoxides, glycols and the mono- and diethers thereof. The preferred physical absorbents herein are sulfones, and most particularly, sulfolane.

The absorbent solution generally has a concentration of diaminoalcohol of about 0.1 to 6 mols per liter of the total solution, and preferably 1 to 4 mols per liter, depending primarily on the specific diaminoalcohol employed and the solvent system utilized. If the solvent system is a mixture of water and a physical absorbent, the typical effective amount of the physical absorbent employed may vary from 0.1 to 5 mole per liter of total solution, and preferably from 0.5 to 3 mols per liter, depending mainly on the type of diaminoalcohol being utilized.

The absorbent solution of this invention may include a variety of additives typically employed in gas removal processes, e.g., antifoaming agents, antioxidants, corrosion inhibitors, and the like. Examples of such additives include arsenious anhydride, selenious and tellurous acid, amino acids, e.g., glycine, vanadium oxides, e.g., $V_2O_5$, etc. The amount of these additives will typically be in the range that they are effective, i.e., an effective amount.

Also, the diaminoalcohols described herein may be admixed with other amino compounds, e.g. tertiary amino compounds, diaminoethers, aminoethers, aminoalcohols and the like which are known acid gas removing agents, as a blend. The particular amino compound to be admixed with the diaminoalcohols will depend for example, on the particular acidic gas(es) to be removed. One preferred such compound is methyldiethanolamine. The ratio of the respective amino compounds may vary widely, for example, from 1:99 to 99:1 mol percent of each amino compound.

The acidic gas, which usually contains $CO_2$ may also include such gases as $H_2S$, $SO_2$, $SO_3$, $CS_2$, HCN, COS, and the oxygen and sulfur derivatives of $C_1$ to $C_4$ hydrocarbons in various amounts as they frequently appear in gaseous mixtures. These acid gases other than $CO_2$ may be present in trace amounts within the gaseous mixture.

The absorption step of this invention generally involves contacting the gaseous stream with the absorbent solution in any suitable contacting vessel. In such processes, the normally gaseous mixture from which the acid gases are to be removed may be brought into intimate contact with the absorbent solution using conventional means, such as a tower or vessel packed with, for example, rings or with sieve plates, or a bubble reactor.

In a preferred mode of practising the invention, the absorption step is conducted by feeding the gaseous mixture into the lower portion or base of the absorption tower while fresh and/or regenerated absorbent solution is fed into the upper region of the tower. The gaseous mixture, freed largely of the acid gases, e.g., $CO_2$, emerges from the upper portion of the tower. Preferably, the inlet temperature of the absorbent solution during the absorption step is in the range of from 20 to 100°C, and more preferably from 40 to 60°C. Pressures may vary widely; acceptable pressures are between 0.34 and 137.9 bar (5 and 2000

psia), preferably 6.89 to 103.42 bar (100 to 1500 psia), and most preferably 13.79 to 68.99 bar (200 to 1000 psia) in the absorber. The contacting takes place under conditions such that the $CO_2$ is absorbed by the solution. During absorption the solution is maintained in a single phase.

A preferred procedure for the removal phase of the process comprises absorbing $CO_2$ via countercurrent contact of the gaseous mixture with the aqueous solution of the diaminoalcohol in a column containing a plurality of trays at a low temperature, e.g., below 45°C, and at a gas velocity of at least 0.09 m/sec (0.3 ft/sec) (based on "active" or aerated tray surface), depending on the operating pressure of the gas, said tray column having fewer than 20 contacting trays, with e.g., 4—16 trays being typically employed.

After contacting the gaseous mixture with the absorbent solution, which becomes saturated or partially saturated with the acidic gases such as $CO_2$, the solution may be at least partially regenerated so that it may be recycled back to the absorber. As with absorption, the regeneration should take place in a single liquid phase. Regeneration or desorption of the $CO_2$ from the absorbent solution may be accomplished by conventional means such as pressure reduction or temperature increase of the solution to a point at which the absorbed $CO_2$ flashes off, or by passing the solution into a vessel of similar construction to that used in the absorption step, at the upper portion of the vessel, and passing an inert gas such as air or nitrogen or preferably steam upward through the vessel. The temperature of the solution during the regeneration step is preferably in the range from 50 to 170°C, and more preferably from 80 to 150°, and the pressure of the solution on regeneration should range from 0.034 to 6.89 bar (0.5 to 100 psia), preferably 0.069 to 0.34 bar (1 to 50 psia). The absorbent solution, after being cleansed of at least a portion of the $CO_2$, may be recycled back to the absorbing vessel. Makeup absorbent may be added as needed.

In the preferred regeneration technique, the $CO_2$-rich solution from the high pressure absorber is sent first to a flash chamber where steam and some $CO_2$ flashed off will in general be about 35 to 40% of the net $CO_2$ recovered in the flash and stripper. Solution from the flash drum is then steam stripped in the packed or plate tower, stripping steam having been generated in the reboiler in the base of the stripper. Pressure in the flash drum and stripper is usually 0.069 to 0.34 bar (1 to 50 psia), preferably 1.034 to 2.068 bar (15 to 30 psia), and the temperature is typically in the range from 50 to 170°C, preferably 80 to 150°C. Stripper and flash temperatures will, of course, depend on stripper pressure; thus at 1.034 to 2.068 bar (15 to 30 psia) stripper pressures, the temperature will be about 80 to about 150°C during desorption. Heating of the solution to be regenerated may very suitably be effected by means of indirect heating with low-pressure steam. It is also possible, however, to use direct injection steam.

In the most preferred embodiment of the present invention, substantially complete removal of carbon dioxide and acidic gases from a normally gaseous feed containing $CO_2$ is accomplished by a continuous process which comprises, in sequential steps: (1) contacting said feed with an aqueous scrubbing solution consisting essentially of the diaminoalcohol herein and water and/or physical absorbent, diaminoalcohol concentration in said solution is in the range from about 1 to 6 molar, preferably 3 to about 5 molar, said contacting being conducted at conditions whereby the carbon dioxide in the feed gas is absorbed in said scrubbing solution, and preferably at temperatures ranging from 20° to 100°C, more preferably from 40° to 60°C, and at a pressure ranging from 0.34 to 137.9 bar (5 to 2000 psig), preferably 6.89 to 103.42 bar (100 to 1500 psig), and most preferably 13.74 to 68.94 bar (200 to 1000 psig), and (2) regenerating said scrubbing solution at conditions whereby said $CO_2$ is desorbed from said scrubbing solution, preferably at temperatures ranging from 50° to 170°C, and more preferably from 80° to 150°C, and at a pressure ranging from 0.068 to 0.34 bar (1 to 50 psia) and more preferably from 1.034 to 2.063 bar (15 to 30 psia).

The process herein may be operated as described in U.S. Pat. No. 4,112,052, i.e., under conditions whereby the difference between the moles of $CO_2$ absorbed at the end of step (a) (absorption step) and the moles of $CO_2$ absorbed at the end of step (2) (desorption step) would be greater at the thermodynamic equilibrium of the vapor-liquid system (as determined from the vapor-liquid equilibrium isotherm of the reaction mixture) than in an aqueous amine $CO_2$ scrubbing process wherein monoethanolamine is the only amine utilized under substantially the same conditions of gaseous feed composition, scrubbing solution composition, temperatures, pressures and amine concentrations. The regenerated amine scrubbing solution may thereafter be recycled to the absorber as it is or it may be combined with fresh makeup scrubbing solution.

The time of contacting the gaseous mixture with the aqueous amine scrubbing solution is an effective amount of time. That is for an amount of time required to remove a predetermined amount of acid gases.

After contacting the gaseous mixture with the aqueous amine scrubbing solution until a capacity of at least 80% or preferably at least 90% of the solution is utilized it must be regenerated. Regeneration of the aqueous amine scrubbing (absorption) solution may be accomplished by decreasing the pressure and/or increasing the temperature of the scrubbing solution to a point at which the absorbed carbon dioxide flashes off. The addition of an inert gas, e.g., $N_2$ or steam during the regeneration of the scrubbing solution is also within the scope of the present invention. The process of regeneration is more particularly described in U.S. Pat. No. 3,848,057, herein incorporated by reference.

It is possible, of course, to employ the process of the present invention in conjunction with other acid gas scrubbing processes. For example, solutions rich in carbon dioxide may be first scrubbed by a bulk scrubbing process using the "hot pot" process as described in, e.g., U.S. Pat. No. 4,217,238, and then

treated in accordance with the present process to remove the last residues of the carbon dioxide containing gases.

The diaminoalcohols to be employed should be chosen on the basis of how many total carbon atoms they contain so as to ensure that they have the requisite solubility (i.e., one phase under absorption and desorption conditions). In addition, the diaminoalcohols chosen preferably have a relatively low volatility so that it will not be lost during absorption and desorption. Preferably, the diaminoalcohols herein will have a boiling point of at least 100°C, and preferably at least 180°C.

The following examples illustrate the efficacy of the invention. In these examples all parts and percentages are given by weight and all temperatures in degrees Celsius unless otherwise noted.

Example 1

Two-Step Preparation of 3,7-diaza-3-ethyl-8-methyl-1-nonanol (DEMN)

A total of 2 kg (22.5 moles) 2-ethylaminoethanol was placed in a 5-liter, 3-neck round-bottom flask equipped with stirrer, condenser, dropping funnel and thermometer to which 1248 g (23.5 moles) of acrylonitrile was added over two hours. During this addition the temperature was not allowed to exceed 94°C.

The adduct thus obtained was divided into five 640 g portions. Each portion was diluted to 2.2 liters with acetone and hydrogenated over Raney nickel at 100°C and 700—1200 psi in a 1-gallon autoclave. The total amount of nickel employed was 116.6 g.

Each batch so obtained was filtered through a pre-coated Buechner funnel and concentrated using a water pump. A total amount of 2927.8 g of DEMN boiling at 80—83°C/0.4 mm Hg was obtained. The total yield of product was 69.5% based on the starting ethylaminoethanol.

Example 2

Preparation of 3,7-diaza-3,8-dimethyl-1-nonanol (DDN)

A total of 2 kg (26.6 moles) of 2-methyl-aminoethanol was placed in the flask described in Example 1. From the dropping funnel 1553 g (29.3 moles) of acrylonitrile were added in the course of two hours. The temperature reached 120°C.

The resulting adduct was hydrogenated in batches in the presence of acetone. Thus, 505.7 g samples of the adduct were diluted to 2.2 liters with acetone and charged into a 1 gallon autoclave. A total 49 g of Raney nickel was washed three times with 250 ml portions of acetone and placed in the autoclave. Hydrogenation was carried out at 50—65°C and 400—1400 psi until the gas chromatograph showed only one product present. The catalyst was removed by filtration and the low boiling materials were stripped using a water pump. The product DDN distilled at 132°C/20 mm Hg in an amount of 510 g (75% of theoretical yield).

Example 3

Preparation of 3,7-diaza-3-isopropyl-8-methyl-1-nonanol

A total of 429 g (2.7 moles) of 3,7-diaza-8-mnethyl nonanol obtained commercially was placed into a 1 gallon autoclave with 2 liters of acetone and 7.5 g of 5% Pt on C, wet with water. Hydrogenation was carried out at 50—68°C and 580—1200 psi for 8 hours. A total pressure drop of 1600 psi was observed.

After cooling, the contents of the autoclave were filtered and concentrated to a pot temperature of 160°C using a 30 cm column. Distillation was continued using a water pump. A toptal of 407.4 g (75% yield) of product was obtained boiling at 142°C/15 mm Hg. Elemental analysis yielded 64.6%°C, 13.08%, H, 13.5% N, with the theoretical values being 65.3% C, 12.95% H and 13.8% N.

Example 4

Three-Step Preparation of 3,7-diaza-3-ethyl-8-methyl-1-nonanol (DEMN)

A total of 2 kg (22.4 moles) of 2-ethylaminoethanol was charged into the apparatus employed in Example 1. Thereafter 1650 ml (25 moles) of acrylonitrile was added in the course of 4.5 hours. The temperature rose from room temperature to 100°C. The adduct product was then allowed to cool to room temperature overnight.

The total amount of the above-identified adduct was divided into three parts of 1108 g each for reduction to be carried out in a 1 gallon autoclave.

The first 1108 g of the adduct was diluted to 2 liters with methanol. The solution was then placed into a 1-gallon autoclave together with 5 g of sodium hydroxide pellets and 155 g of Raney nickel previously washed with three 300-ml portions of methanol. Hydrogenation was carried out at 1000—1400 psi and 30—40°C for seven hours. The product was filtered from the catalyst.

The second 1108 g of the adduct was hydrogenated as described above except that 213 g of Raney nickel were employed. Hydrogenation was complete in 2 hours at 38—44°C and 650—1300 psi.

The third 1108 g of the adduct was hydrogenated over 204 g of Raney nickel for two hours at 150—10000 psi at a maximum temperature of 51°C.

The three hydrogenation products were combined and distilled to remove methanol completely. A total of 2300 g of the product N-ethyl-N-hydroxyethyl-1,3-propanediamine boiling at 88—90°C/0.05 mm Hg was obtained. Approximately one liter of pot residue was discarded. The diaminoalcohol was fractionated

through a 30-cm column and 2109 g (64.5% yield) of the purified product was obtained having a boiling point of 128°C/15 mm Hg.

In the third step 1 kg of this purified product, 1 liter of acetone and 5 g of 10% Pd on carbon were charged in a 1-gallon autoclave. The hydrogenation was carried out at 30—35°C and 900—1300 psi for 4 hours.

A second kg of the purified product was hydrogenated in the same manner for 1.3 hours at 35°C using 10 g of 10% Pd/C. The two hydrogenation products were combined, the catalyst was separated by filtration and the filtrate was distilled. An amount of 2282 g of the final alkylated product (DEMN) were obtained, boiling at 112—113°C/20 mm Hg. The yield in the hydrogenation step was 88.3%.

Example 5

Preparation of 3,7-diaza-3,8-dimethyl-1-decanol

A total of 462.7 g of N-(3-aminopropyl)-N-methylaminoethanol (3.5 mols) is diluted to 1.7 liters with methyl ethyl ketone (MEK), then to 2 liters with methanol. 10 g of 10% Pd on C is added. Hydrogenation is carried out at 900—1100 psi; 630 psi of hydrogen is absorbed within 30 minutes.

The catalyst was separated by filtration and the solvent was stripped at the water pump up to 160°C/34 mm.

The product is distilled at 145°C/15 mm Hg and amounts to 508 g (77.2% yield). Elemental analysis gave 62.4% C, 12.69% H, 14.6% N, the theoretical values being 63.8% C, 12.85% H and 14.9% N.

Example 6

Use of Diaminoalcohols in $CO_2$ Gas Treating

The experimental reaction apparatus used is shown in Fig. 1. It is a reaction vessel V having a capacity of about 2.5 liters and a diameter of 10 cm, equipped with a heating jacket. The stirrer shaft carries two three-blade propellers, of which the upper one pushes the liquid downward and the lower one pushes the liquid upward. Pump $P_1$ removes liquid from the bottom of the reaction vessel and feeds it back to the gas-liquid interface through a stainless steel sparger $S_1$. Vertical baffles further increase the contact between liquid and gas. Thermocouple T permits the reading of the temperature of the liquid. The top of a reflux condenser C is connected to a U-shaped, open ended manometer M. The apparatus can be evacuated by means of pump $P_2$ through tap $T_1$. Nitrogen and $CO_2$ can be fed to the bottom of the reaction vessel through sparger $S_2$, using tap $T_2$; $CO_2$, coming from a cylinder, goes first through the reservoir tank R acting as a ballast, then through a 3—1 wet test meter WTM, then through bubbler $B_1$, where it is saturated with water. Hg-bubbler $B_2$ ensures that no air is sucked into the reservoir tank R.

Constriction such as narrow tubings and taps have been carefully avoided in the $CO_2$ path. Tap $T_2$, which is the only one inserted in such a path, has a key with large holes (8 mm).

Detailed Description of Absorption

Desorption Reabsorption Experiments

Various solutions weighing 766 g containing 55 wt.% of the amine set forth in Table 1 below, 30% $H_2O$, and 15% sulfolane were individually put into the absorber and pumped around at a rate of 4 liters/minutes until their temperature was 40°C. At this point the cell was evacuated until the solution began to boil. Tap $T_1$ was then closed, the stirrer started, and $CO_2$ admitted. Each run was continued until absorption of one liter of $CO_2$ took more than 10 minutes.

The resulting rich solution was transferred to the desorber and brought to reflux. At this point nitrogen was fed to the bottom of the desorber at a rate of about 0.2 liters/minute. Refluxing was continued for 15 minutes. The regenerated solution was then transferred back to the absorber and pumped around until its temperature reached 40°C. The cell was then evacuated until the solution began to boil. Tap $T_1$ was closed, the stirrer started, and $CO_2$ admitted. Each run was again stopped when absorption of one liter of $CO_2$ took more than 10 minutes. The total amount of $CO_2$ absorbed for each amine is set forth in Table 1 below.

TABLE I

$CO_2$ Absorption (Stirred Cell)

55% Amine, 30% $H_2O$, 15% Sulfolane

| Amine | $CO_2$ Reabsorbed, Liters |
|---|---|
| 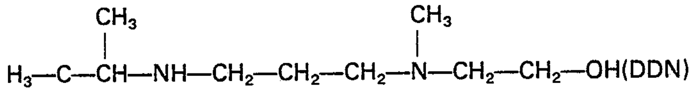 (DDN) | 55.5 |
| idem | 58 |
| 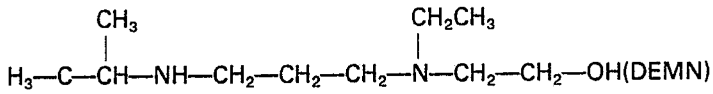 (DEMN) | 52.8 |
| idem | 58 |
| 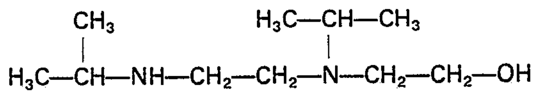 | 44 |
| 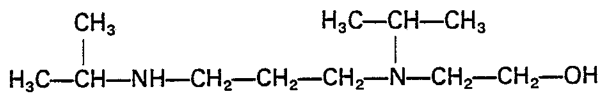 | 48 |
| 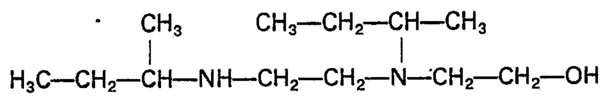 | 43 |
| 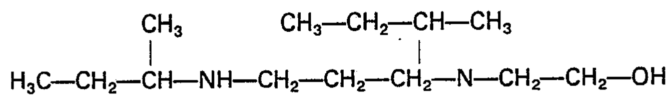 | 41 |
| 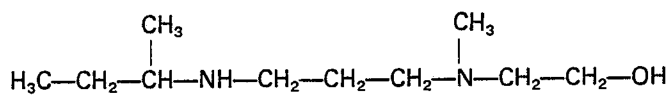 | 53.5 |

Example 7
Stability of Diaminoalcohols

Three solutions containing 55% of the diaminoalcohol indicated in Table II, 30% $H_2O$ and 15% sulfolane by weight were charged in a bomb and loaded with $CO_2$ in the indicated amount. The solutions were then measured for the percent of diamino alcohol present therein and then aged in ampoules at 140°C for 16 days. After the aging the percent of diamino aminoalcohol in each solution was determined.

TABLE II

Stability of Diaminoalcohols

| Aminoalcohol | Initial Solution Loaded with $CO_2$ | | Solution After Aging at 140°C for 16 days |
|---|---|---|---|
| | % Amine | % $CO_2$ | % Amine |
| 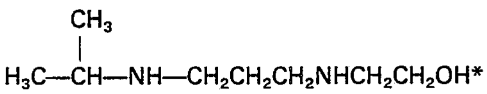* | 52.6 | 6.45 | <10 |
| 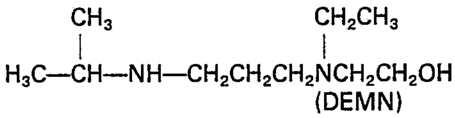 (DEMN) | 48.9 | 8.9 | 29.6 |
| 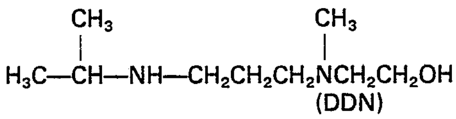 (DDN) | 47.1 | 8.6 | 24.5 |

* Comparative Example

The results show that although less $CO_2$ was employed in the case of the di-secondary aminoalcohol, the secondary-tertiary aminoalcohols of this invention were far superior in their stability towards $CO_2$, as indicated by the higher percentage of amine present after aging. Thus, the aminoalcohols of this invention exhibit improved stability, under acid gas removal conditions as compared to the di-secondary aminoalcohol of the type disclosed in U.S. Pat. No. 3,197,510.

Example 8

Solubility of Diaminoalcohols

Six solutions containing 55% of the diaminoalcohol indicated in Table III, 30% $H_2O$ and 15% sulfolane by weight were charged into a flask and heated to reflux at 102°C. The number of phases present at reflux and at room temperature were measured and the results are indicated in Table III.

TABLE III

| Aminoalcohol | Number of Phases | |
|---|---|---|
| | Room Temp | 102°C |
| 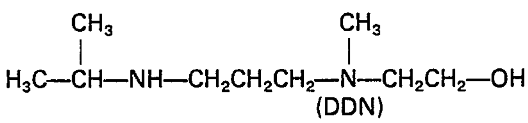 (DDN) | one | one |
| 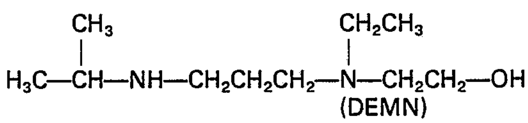 (DEMN) | one | one |
| 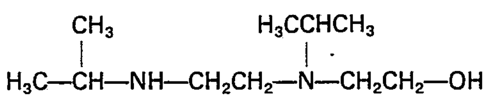 | one | one |
| 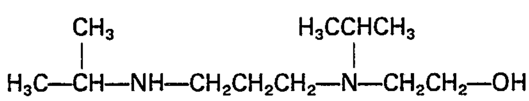 | one | one |
| 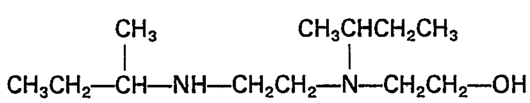 | one | two |
| 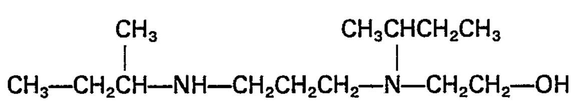 | two | two |

The results indicate that the aminoalcohol of this invention must preferably contain no more than eleven carbon atoms in total so as to be suitably soluble for purposes of removing acidic gases under absorption conditions. Therefore, the diaminoalcohol disclosed in U.S. Pat. 3,288,748 is not suitable as a gas treating agent as are the compounds of this invention.

In summary, the present invention is seen to provide a class of diaminoalcohols having both a tertiary and secondary amino group and a certain maximum number of carbon atoms which is useful in removing $CO_2$ from normally gaseous mixtures and which shows superior resistance to degradation under $CO_2$-rich conditions. These diaminoalcohols can be prepared by an efficient two-step process wherein a nitrile is prepared and is then simultaneously hydrogenated and alkylated.

**Claims**

1. A diaminoalcohol having the formula

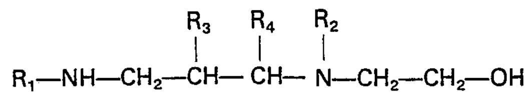

where $R_1$ is a secondary alkyl group having from three to five carbon atoms, $R_2$ is an alkyl group having from one to three carbon atoms, $R_3$ and $R_4$ are independently hydrogen or methyl groups and $R_1$ and $R_2$ are selected so that the total number of carbon atoms in $R_1$ and $R_2$ is no greater than six.

2. A diaminoalcohol according to claim 1 having no more than 11 carbon atoms per molecule.

3. A diaminoalcohol according to either of claims 1 and 2 wherein $R_1$ ios an isopropyl group, $R_2$ is a methyl, ethyl or isopropyl group and $R_3$ and $R_4$ are hydrgoen.

4. A diaminoalcohol according to any one of the preceding claims in combination with a tertiary amino compound.

5. A diaminoalcohol according to any one of claims 1 to 3 in combination with methyl diethanolamine.

6. A diaminoalcohol according to any one of claims 1 to 3 in combination with a solvent selected from water, a physical absorbent and a mixture thereof.

7. A diaminoalcohol according to any one of claims 1 to 3 in combination with a physical solvent comprising a sulphone, a sulphoxide, a glycol or a mono- or di-ether of a glycol and in combination with an additive selected from antifoaming agents, antioxidants and corrosion inhibitors.

8. A diaminoalcohol in combination with a solvent according to either of claims 6 and 7 which contains about 0.1 to 5 moles per liter of said solvent and from 0.1 to 6 moles per liter of said diaminoalcohol.

9. A process for removing $CO_2$ and other acid gases from a normally gaseous mixture, which comprises:

(a) contacting said normally gaseous mixture under $CO_2$ absorption conditions with an absorbent solution comprising a diaminoalcohol according to any one of claims 1 to 3; and

(b) desorbing at least a portion of the absorbed $CO_2$ from said solution.

10. A process according to claim 9 wherein the contacting step is conducted at a temperature ranging from 20 to 100°C and at a pressure ranging from 0.34 to 137.9 bar (5 to 2000 psia) and the desorption step is conducted by heating the solution at a temperature ranging from about 50 to 170°C and at a pressure ranging from 0.034 to 6.89 bar (0.5 to 100 psia).

11. A process for preparing a diaminoalcohol of the formula:

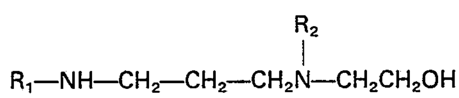

where $R_1$ is a secondary alkyl group having from three to five carbon atoms, $R_2$ is an alkyl group having from one to three carbon atoms and $R_1$ and $R_2$ are selected so that the total number of carbon atoms in $R_1$ and $R_2$ is no greater than six comprising the steps of:

(a) reacting acrylonitrile with a 2-aminoethanol of the formula:

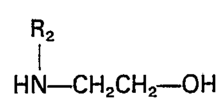

wherein $R_2$ is an alkyl group having one to three carbon atoms to form a nitrilo aminoethanol of the formula:

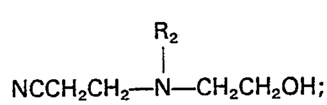

; and

(b) reacting the nitrilo aminoethanol from step (a) with a ketone containing from three to five carbon atoms under hydrogenation conditions in the presence of hydrogen gas and a hydrogenation catalyst until the diamino alcohol is produced.

12. A process according to claim 11 wherein step (a) is carried out at a temperature no greater than 130°C and step (b) is carried out from 30—70°C at 10.34 to 98.5 bar ((150—1400 psi) pressure using Raney nickel as catalyst.

**Patentansprüche**

1. Diaminoalkohol der Formel:

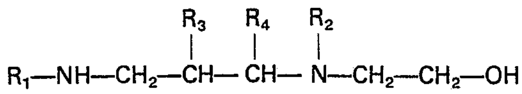

in der $R_1$ eine sekundäre Alkylgruppe mit 3 bis 5 Kohlenstoffatomen ist, $R_2$ eine Alkylgruppe mit 1 bis 3 Kohlenstoffatomen ist, $R_3$ und $R_4$unabhängig voneindander Wasserstoff oder Methylgruppen sind und $R_1$ und $R_2$ so ausgewählt sind, daß die Gesamtzahl von Kohlenstoffatomen in $R_1$ und $R_2$ nicht größer als 6 ist.

2. Diaminoalkohol nach Anspruch 1, dadurch gekennzeichnet, daß er nicht als 11 Kohlenstoffatome pro Molekül aufweist.

3. Diaminoalkohol nach einem der Ansprüche 1 bis 2, dadurch gekennzeichnet, daß $R_1$ eine Isopropylgruppe ist, $R_2$ eine Methyl-, Ethyl- oder Isopropylgruppe ist und $R_3$ und $R_4$ Wasserstoff sind.

4. Diaminoalkohol nach einem der vorangehenden Ansprüche in Kombination mit einer tertiären Aminoverebindung.

5. Diaminoalkohol nach einem der Ansprüche 1 bis 3 in Kombination mit Methyldiethanolamin.

6. Diaminoalkohol nach einem der Ansprüche 1 bis 3 in Kombination mit einem Lösungsmittel ausgewählt aus Wasser, einem physikalischen Absorbens und einer Mischung davon.

7. Diaminoalkohol nach einem der Ansprüche 1 bis 3 in Kombination mit einem physikalischen Lösungsmittel, welches ein Sulfon, ein Sulfoxid, ein Glykol oder einen Mono- oder Diether eines Glykols umfaßt, und in Kombination mit einem Additiv ausgewählt aus Antischaummitteln, Antioxidantien und Korrosionsinhibitoren.

8. Diaminoalkohol in Kombination mit einem Lösungsmittel nach Anspruch 6 oder 7, dadurch gekennzeichnet, daß die Kombination etwa 0,1 bis 5 Mol pro Liter Lösungsmittel und 0,1 bis 6 Mol pro Liter Diaminoalkohol enthält.

9. Verfahren zur Entfernung von $CO_2$ und anderen sauren Gasen aus einer normalerweise gasförmigen Mischung, bei dem

(a) die normalerweise gasförmige Mischung unter $CO_2$-Absorptionsbedingungen mit einer Absorptionslösung, die einen Diaminoalkohol gemäß einem der Ansprüche 1 bis 3 enthält, kontaktiert wird und

(b) zumindest ein Teil des absorbierten $CO_2$ aus der Lösung desorbiert wird.

10. Verfahren nach Anspruch 9, dadurch gekennzeichnet, daß der Kontaktierungsschritt bei einer Temperatur von 20 bis 100°C und einem Druck von 0,34 bis 137,9 bar (5—2000 psia) durchgeführt wird und der Desorptionsschritt durch Erhitzen der Lösung auf eine Temperatur von etwa 50 bis 170°C und bei einem Druck von 0,034 bis 6,89 bar (0,5—100 psia) durchgeführt wird.

11. Verfahren zur Herstellung eines Diaminoalkohols der Formel:

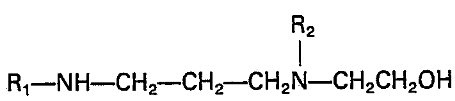

in der $R_1$ eine sekundäre Alkylgruppe mit 3 bis 5 Kohlenstoffatomen ist, $R_2$ eine Alkylgruppe mit 1 bis 3 Kohlenstoffatomen ist und $R_1$ und $R_2$ so ausgewählt werden, daß die Gesamtzahl an Kohlenstoffatomen in $R_1$ und $R_2$ nicht größer als 6 ist, bei dem

(a) Acrylnitril mit einem 2-Aminoethanol der Formel:

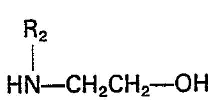

in der $R_2$ eine Alkylgruppe mit 1 bis 3 Kohlenstoffatomen ist, zur Reaktion gebracht wird, um ein Nitrilaminoethanol der Formel:

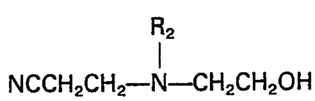 zu bilden und

(b) das Nitrilaminoethanol aus Stufe (a) mit einem Keton, welches 3 bis 5 Kohlenstoffatome enthält, unter Hydrierungsbedingungen in Gegenwart von Wasserstoff gas und einem Hydrierungskatalysator zur Reaktion gebracht wird, bis der Diaminoalkohol gebildet ist.

12. Verfahren nach Anspruch 11, dadurch gekennzeichnet, daβ Stufe (a) bei einer Temperatur, die nicht größer als 130°C ist, und Stufe (b) bei 30 bis 70°C und einem Druck von 10,34 bis 96,5 bar unter Verwendung von Raneynickel als Katalysator durchgeführt werden.

**Revendications**

1. Diaminoalcool répondant à la formule:

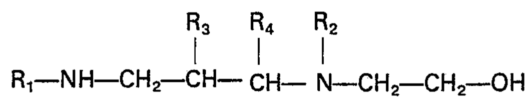

dans laquelle $R_1$ est un groupe alkyle secondaire comportant de 3 à 5 atomes de carbone, $R_2$ est un groupe alkyle comportant de 1 à 3 atomes de carbone, $R_3$ et $R_4$ sont indépendamment des atomes d'hydrogène ou des groupes méthyle et $R_1$ et $R_2$ sont choisis de telle sorte que le nombre total des atomes de carbone dans $R_1$ et $R_2$ ne soit pas supérieur à 6.

2. Diaminoalcool selon la revendication 1, ne comportant pas plus de 11 atomes de carbone par molécule.

3. Diaminoalcool selon l'une quelconque des revendications 1 et 2, dans lequel $R_1$ est un groupe isopropyle, $R_2$ est un groupe méthyle, éthyle ou isopropyle et $R_3$ et $R_4$ sont des atomes d'hydrogène.

4. Diaminoalcool selon l'une quelconque des revendications précédentes, en combinaison avec un composé d'amine tertiaire.

5. Diaminoalcool selon l'une quelconque des revendications 1 à 3, en combinaison avec de la méthyldiéthanolamine.

6. Diaminoalcool selon l'une quelconque des revendications 1 à 3, en combinaison avec un solvant choisi parmi l'eau, un absorbant physique et un mélange de ceux-ci.

7. Diaminoalcool selon l'une quelconque des revendications 1 à 3, en combinaison avec un solvant physique comprenant une sulfone, un sulfoxyde, un glycol ou un monoéther ou diéther d'un glycol, et en combinaison avec un additif choisi parmi les agents antimousses, les antioxydants et les inhibiteurs de corrosion.

8. Diaminoalcool en combinaison avec un solvant selon l'une quelconque des revendications 6 et 7, qui contient d'environ 0,1 à 5 moles par litre dudit solvant et de 0,1 à 6 moles par litre dudit diaminoalcool.

9. Procédé d'élimination du $CO_2$ et d'autres gaz acides d'un mélange normalement gazeux qui comprend les étapes qui consistent:

(a) à mettre en contact le mélange normalement gazeux, dans des conditions d'absorption de $CO_2$, avec une solution absorbante comprenant un diaminoalcool selon l'une quelconque des revendications 1 à 3; et

(b) à désorber au moins une partie du $CO_2$ absorbé pour le séparer de ladite solution.

10. Procédé selon la revendication 9, dans lequel l'étape de mise en contact est réalisée à une température s'échelonnant de 20 à 100°C et à une pression absolue s'échelonnant de 0,34 à 137,9 bars (5 à 2000 psia), et l'étape de désorption est réalisée par chauffage de la solution à une température s'échelonnant d'environ 50 à 170°C et à une pression absolue s'échelonnant de 0,034 à 6,89 bars (0,5 à 100 psia).

11. Procédé de préparation d'un diaminoalcool de formule:

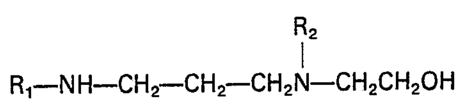

dans laquelle $R_1$ est un groupe alkyle secondaire comportant de 3 à 5 atomes de carbone, $R_2$ est un groupe alkyle comportant de 1 à 3 atomes de carbone et $R_1$ et $R_2$ sont choisis de telle sorte que le mombre total d'atomes de carbone dans $R_1$ et $R_2$ ne soit pas supérieur à 6, comprenant les étapes qui consistent:

(a) à faire réagir de l'acrylonitrile avec un 2-aminoéthanol de formule:

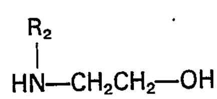

dans laquelle $R_2$ est un groupe alkyle comportant 1 à 3 atomes de carbone, pour former un nitriloaminoéthanol de formule:

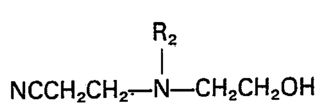

et

(b) à faire réagir le nitrilo-aminoéthanol de l'étape (a) avec une cétone contenant de 3 à 5 atomes de carbone, dans des conditions d'hydrogénation, en présence de gaz hydrogène et d'un catalyseur d'hydrogénation, jusqu'à ce que le diaminoalcool soit produit.

12. Procédé selon la revendication 11, dans lequel l'étape (a) est réalisée à une température ne dépassant pas 130°C et l'étape (b) est réalisée à une température de 30—70°C, sous une pression de 10,34 à 98,5 bars (150—1400 psi), à l'aide de nickel de Raney comme catalyseur.

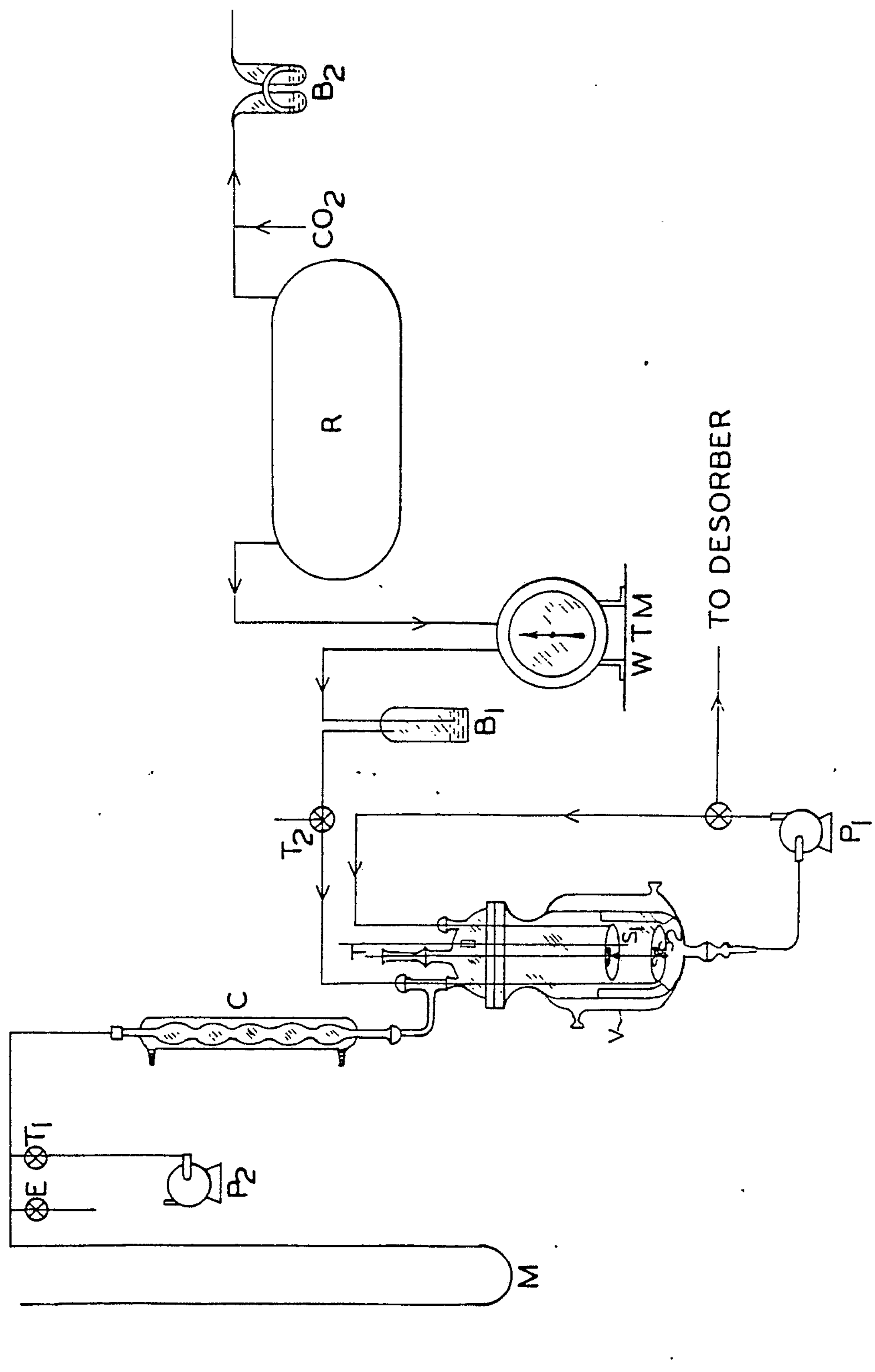
B2
CO2
R
WTM
TO DESORBER
B1
T2
P1
C
S1
V
E
T1
P2
M